# EUROPÄISCHE PATENTSCHRIFT

(11) **EP 0 738 835 B1**
(45) Veröffentlichungstag und Bekanntmachung des Hinweises auf die Patenterteilung: **02.12.1998**
(21) Anmeldenummer: 96104918.6
(22) Anmeldetag: 28.03.1996
(51) Int. Cl.: F16B 13/14

(54) **Dübel mit einer Siebhülse**
Dowel with screen-type sleeve
Cheville à enveloppe en forme de crible

(30) Priorität: 20.04.1995 DE 19514529
(43) Veröffentlichungstag der Anmeldung: 23.10.1996
(73) Patentinhaber: Adolf Würth GmbH & Co. KG, 74653 Künzelsau (DE)
(72) Erfinder: Kerl Gregor, D-75676 Niederhall (DE)
(74) Vertreter: Patentanwälte Ruff, Beier, Schöndorf und Mütschele

(56) Entgegenhaltungen:
- EP-A- 0 172 134
- EP-A- 0 338 982
- DE-U- 9 005 451
- US-A- 4 836 729
- US-A- 4 893 974

## Beschreibung

Die Erfindung geht aus von einem Dübel mit einer siebartigen Hülse und einem zum Einsetzen in diese Siebhülse ausgebildeten Verankerungselement.

Dübel dieser Art dienen dazu, das Verankerungselement, beispielsweise einen Schraubbolzen, mit Hilfe einer aushärtenden Masse in einem Mauerwerk o. dgl. zu verankern. Dabei erfolgt die Verankerung durch Aushärten der Masse sowohl zwischen dem Verankerungselement und der Dübelhülse als auch zwischen der Dübelhülse und dem Dübelloch. Beim Aushärten der Masse entsteht eine formschlüssige Verbindung zwischen dem Verankerungselement, der Dübelhülse und der Wand des Dübellochs. Bei den bekannten Dübeln dieser Art besteht die Dübelhülse aus einem Drahtgeflecht oder einem Streckmetall, in jedem Fall also aus Metall. Die aushärtende Masse, im allgemeinen ein Kleber, geht beim Aushärten eine Klebeverbindung mit dem Metall ein, so daß also zwischen der Wand des Dübellochs und dem Verankerungselement ein durchgehender Pfropf ohne Schwachstellen entsteht.

Würde man anstelle einer Siebhülse aus einem metallischen Material eine Hülse aus Kunststoff mit entsprechenden Öffnungen verwenden, so würde sich der Nachteil herausstellen, daß der üblicherweise verwendete Kleber mit dem Kunststoffmaterial keine Verbindung eingeht. Der zwischen der Wand des Dübellochs und der Hülse entstehende Pfropf wäre dann mit dem zwischen dem Verankerungselement und der Kunststoffhülse vorhandenen ausgehärteten Pfropf nur durch die durch die Öffnungen der Hülse hindurchgreifenden Teile der ausgehärteten Masse verbunden. Bei einer sehr starken Belastung könnte dann ein Abscheren dieser geschwächten Teile erfolgen. Daher hätten Dübel dieser Art mit einer aus Kunststoff bestehenden Dübelhülse nur relativ geringe Verankerungswerte.

Dübel der eingangs erwähnten Art mit aus Metall bestehenden Siebhülsen sind aus EP-A-172 134 und EP-A-338 982 bekannt.

Es ist bereits eine Verankerungseinheit bekannt (US-PS 4836729), die eine äußere mit Öffnungen versehene Hülse enthält. Die Hülse enthält an ihrer Außenseite in Umfangsrichtung verlaufende Vorsprünge und an ihrer Innenseite in Längsrichtung verlaufende Vorsprünge. In die Hülse wird eine zweite innere Hülse eingesetzt, die ebenfalls an ihrer Außenseite umlaufende Vorsprünge und an ihrer Innenseite axiale Vorsprünge aufweist. Die Festlegung der äußeren Hülse in dem Mauerwerk geschieht mit Hilfe eines Klebers, ebenso die Festlegung der inneren Hülse in der äußeren Hülse.

Der Erfindung liegt die Aufgabe zugrunde, einen Dübel mit einer siebartigen Hülse zu schaffen, der bei niedrigen Herstellungskosten hohe Auszugswerte erreicht.

Zur Lösung dieser Aufgabe schlägt die Erfindung einen Dübel mit den im Anspruch 1 aufgeführten Merkmalen vor. Weiterbildungen der Erfindung sind Gegenstand von Unteransprüchen.

Durch die von der Erfindung sowohl an der Außenseite als auch an der Innenseite der Dübelhülse vorgeschlagenen Vorsprünge erfolgt eine formschlüssige Verkeilung zwischen dem Dübelloch und der Hülse einerseits und zwischen der Hülse und dem Verankerungselement andererseits. Daher wird selbst bei der an sich vorhandenen Schwächung des Pfropfs dadurch, daß kein Anhaften der aushärtenden Masse an dem Material der Dübelhülse erfolgt, dennoch eine feste Verkeilung erreicht, die selbst bei Abscheren der durch die Öffnungen der Hülse hindurch reichenden Teile der ausgehärteten Masse noch wirksam ist.

In Weiterbildung der Erfindung kann vorgesehen sein, daß der Innendurchmesser der Dübelhülse an den Stellen der nach innen gerichteten Vorsprünge größer ist als der Außendurchmesser des Verankerungselements. Die nach innen gerichteten Vorsprünge bilden dadurch zwar Einschnürungen der aushärtenden Masse, die aber nicht so weit nach innen reichen, daß die zwischen den Vorsprüngen vorhandenen Teile der Masse nicht mehr miteinander verbunden sind.

Erfindungsgemäß ist in Weiterbildung vorgesehen, daß die Vorsprünge an der Außenseite der Dübelhülse die Rücksprünge an der Innenseite der Dübelhülse bilden und umgekehrt. Die Dübelhülse kann, um dies zu erreichen, beispielsweise überall mindestens in radialer Richtung die gleiche Wandstärke aufweisen.

Da ein Dübel in erster Linie in Richtung seiner Längsachse beansprucht wird und ein Herausziehen verhindert werden soll, kann erfindungsgemäß vorgesehen sein, daß sich die Vorsprünge und die Rücksprünge über einen ganzen Umfang der Dübelhülse erstrecken. Sie können insbesondere einen Kreisquerschnitt aufweisen. Eine Sicherung der Dübelhülse bzw. des Dübels gegen ein Verdrehen ist kaum erforderlich.

Insbesondere kann in Weiterbildung der Erfindung vorgesehen sein, daß die Dübelhülse die Form von flachen zylindrischen Abschnitten mit einem abwechselnd größeren und kleineren Durchmesser aufweist. Insbesondere ist der größere Durchmesser und der kleinere Durchmesser jeweils untereinander gleich. Dadurch bilden die Vorsprünge gegenüber den Rücksprüngen im Querschnitt zylindrische Rippen.

In nochmaliger Weiterbildung der Erfindung kann vorgesehen sein, daß die Dübelhülse im Bereich ihres äußeren Endes eine Zentriereinrichtung für das Verankerungselement aufweist. Damit soll dafür gesorgt werden, daß der radiale Abstand zwischen dem Verankerungselement und der Dübelhülse überall möglichst gleich ist, damit auch die aushärtende Masse das Verankerungselement allseits umgibt.

Insbesondere kann vorgesehen sein, daß die Zentriereinrichtung von einem nach innen gerichteten Flansch der Dübelhülse gebildet wird, der eine dem Außendurchmesser des Verankerungselements entsprechende Öffnung aufweist. Dieser Flansch mit seiner Öffnung bildet gleichzeitig eine Art Abdichtung der Dübelhülse nach vorne, die beim Einschieben des Verankerungselements in die mit der noch nicht ausgehärteten Masse versehene Dübelhülse ein Herausquellen der Masse nach vorne verhindert.

Erfindungsgemäß kann auch hier vorgesehen sein, daß der Durchmesser der Öffnung des Flanschs kleiner ist als der minimale Innendurchmesser der Dübelhülse.

Besonders günstig ist es, wenn der nach innen gerichtete Flansch zur Bildung der Zentriereinrichtung gleichzeitig Teil eines nach außen gerichteten Flanschs zur Anlage der Dübelhülse an der Oberfläche der Wand ist.

Erfindungsgemäß kann vorgesehen sein, daß das innere Ende der Dübelhülse einen geschlossenen Boden aufweist. An dieser Stelle würde die aushärtende Masse nicht zur Auszugsicherung des Verankerungselements aus dem Dübelloch beitragen. Im Gegensatz zur Herstellung der Dübelhülse aus einem Metallgeflecht, wo auch der geschlossene Boden Öffnungen aufweisen würde, kann bei der Herstellung der Dübelhülse als Kunststoffspritzteil der Boden tatsächlich geschlossen sein, d. h. keinerlei Öffnungen aufweisen.

In Weiterbildung der Erfindung kann vorgesehen sein, daß sich die Dübelhülse an ihrem inneren, d. h. in das Innere des Dübellochs hinein gerichteten Ende trichterartig verengt, was insbesondere dadurch geschehen kann, daß sich der Durchmesser der Dübelhülse im Bereich ihres inneren Endes stufenartig verringert. Diese stufenartige bzw. trichterartige Verengung kann zur Zentrierung des Verankerungselements an dessen innerem Ende dienen.

Die Erfindung schlägt vor, die Dübelhülse als Kunststoffspritzteil aus zwei Teilen bestehend herzustellen, die längs einer Längsmittelebene der Dübelhülse getrennt sind, wobei die Herstellung vorzugsweise so erfolgen kann, daß die beiden Teile mit Hilfe eines Filmscharniers miteinander verbunden sind. Die gegenüberliegenden Teile der Dübelhülsen können Ausbildungen aufweisen, die eine Ausrichtung der beiden Teile der Dübelhülse bei ihrem Zusammenklappen bewirken.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: einen Längsschnitt durch eine Dübelhülse für einen Dübel nach der Erfindung;
- Fig. 2: eine Aufsicht auf die Dübelhülse der Fig. 1 von oben.

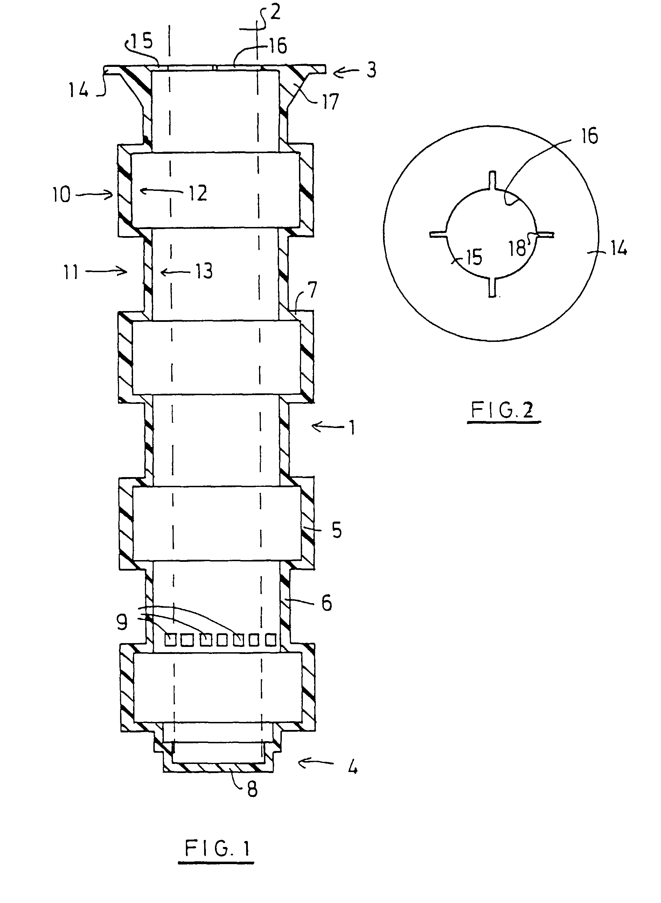

Fig. 1 zeigt einen Längsmittelschnitt durch eine Dübelhülse 1, die zum Einsetzen in ein vorher gebohrtes Dübelloch und zur Aufnahme eines gestrichelt angedeuteten Verankerungselements 2 bestimmt ist. Die Dübelhülse 1 weist ein äußeres Ende 3 auf, das in eingesetztem Zustand an der Oberfläche der Wand angeordnet ist, sowie ein inneres Ende 4, mit dem sie in das Dübelloch eingesetzt wird. Die Dübelhülse 1 weist die Form einzelner zylindrischer Abschnitte 5, 6 auf, die einander abwechselnd hintereinander angeordnet sind. Die zylindrischen Abschnitte 5 weisen einen untereinander gleichen größeren Durchmesser auf, während die Abschnitte 6 wiederum einen untereinander gleichen kleineren Durchmesser aufweisen. Verbunden sind die Abschnitte 5, 6 miteinander durch ringartige in einer Ebene liegende Schultern 7.

Der dem inneren Ende 4 der Dübelhülse 1 benachbarte letzte Abschnitt 5 geht über mehrere Stufen in einen ebenen geschlossenen Boden 8 über. Durch die an der Außenseite und Innenseite des vorderen Endes 4 der Dübelhülse 1 gebildeten Stufen ergibt sich eine stufenartige Verringerung des Innendurchmessers, die zur Zentrierung des vorderen Abschnitts des Verankerungselements 2 dienen kann.

Die Mantelflächen der zylindrischen Abschnitte 5, 6, d. h. die radialen Wandflächen, sind mit einer Vielzahl von einzelnen Öffnungen 9 versehen, die in Fig. 1 nur für einen der Abschnitte 6 angedeutet sind, die aber bei allen Abschnitten 5, 6 vorhanden sind. In den ringförmigen Schulterabschnitten 7 sind keine solchen Öffnungen vorhanden.

Die zylindrischen Abschnitte 5, 6 bilden an der Außenseite der Dübelhülse 1 Vorsprünge 10 und Rücksprünge 11, die einander abwechseln. Aufgrund einer mindestens in radialer Richtung überall gleichen Wandstärke bilden die Vorsprünge 10 an der Außenseite gleichzeitig Rücksprünge 12 an der Innenseite der Dübelhülse, während die äußeren Rücksprünge 11 Vorsprünge 13 an der Innenseite bilden.

Der Innendurchmesser der Dübelhülse 1 an der Stelle der inneren Vorsprünge 13, mit anderen Worten der minimale Innendurchmesser der Dübelhülse 1, ist größer als der Außendurchmesser des Verankerungselements 2.

Im Bereich des äußeren Endes 3 enthält die Dübelhülse einen nach außen gerichteten Flansch 14, der zur Anlage an der Oberfläche der Wand bestimmt ist. Dieser nach außen gerichtete Flansch 14 setzt sich in einen nach innen gerichteten Flansch 15 fort, der eine Öffnung 16 bildet. Der Durchmesser der Öffnung 16, siehe auch Fig. 2, entspricht etwa dem Außendurchmesser des Verankerungselements 2, ist also ebenfalls kleiner als der minimale Innendurchmesser der Dübelhülse 1.

Zwischen dem nach außen gerichteten Flansch 14 und der Dübelhülse 1 ist eine Wandverstärkung 17 angeformt, die eine Verstärkung des Flanschs 14 bilden soll.

Fig. 2 zeigt die Stirnansicht der Dübelhülse der Fig. 1, d. h. in Fig. 1 von oben. Der nach außen gerichtete Flansch 14 und der nach innen gerichtete Flansch 15 gehen so ineinander über, daß die Stirnfläche eine geschlossene Ringfläche ist. Im Rand der Öffnung 16 können einzelne Einschnitte 18 vorhanden sein.

Die in Fig. 1 und 2 dargestellte Dübelhülse wird längs einer Längsmittelebene geteilt aus zwei Teilen hergestellt, die dann vorzugsweise mit Hilfe eines Filmscharniers aneinander angelenkt sind, so daß bei der Produktion nur ein einziges Teil entsteht, das dann zur Benutzung zusammengeklappt wird. Die so entstandene Dübelhülse nach Fig. 1 wird in ein vorher gebohrtes Dübelloch eingesetzt, bis der Flansch 14 an der Oberfläche der Wand anliegt. Anschließend wird in das Innere der Dübelhülse eine später aushärtende Masse eingebracht, beispielsweise unter Druck. Danach wird das Verankerungselement 2 durch die Öffnung 16 eingeschoben. Der Kleber wird dadurch ähnlich wie bei einer Kolbenpumpe durch die Öffnungen 9 in der Mantelfläche der zylindrischen Abschnitte 5 und 6 nach außen in den Zwischenraum zwischen der Dübelhülse 1 und der Wand des Bohrlochs gepreßt. Die Masse füllt dadurch diesen Zwischenraum ebenso aus wie den Zwischenraum zwischen der Innenseite der Dübelhülse und dem Verankerungselement 2. Nach außen, d. h. in Richtung auf das äußere Ende 3 der Dübelhülse, kann die Masse nicht gelangen, da der nach innen gerichtete Flansch 5 dies verhindert.

Nach vollständigem Aushärten entsteht an der Außenseite der Dübelhülse 1 und an ihrer Innenseite ein ausgehärteter Pfropf, der aufgrund der abwechselnden Vorsprünge und Rücksprünge in axialer Richtung, d. h. in Auszugsrichtung des Verankerungselements 2, durch Formschluß festgelegt ist. Selbst wenn die beiden Teile dieses Pfropfs nur durch die durch die Öffnungen 9 hindurch greifenden Teile miteinander verbunden sind, so verhindert der Formschluß an der Außenseite und an der Innenseite zuverlässig das Herausziehen des Verankerungselements aus dem Dübelloch.

## Patentansprüche

1. Dübel mit
1.1 einer siebartigen Dübelhülse (1), die
1.1.1 zur Aufnahme einer aushärtenden Masse bestimmt ist,
1.1.2 in einem Dübelloch durch die ausgehärtete Masse verankert wird, und
1.1.3 aus Kunststoff besteht und
1.1.4 an ihrer Außenseite (10) Vorsprünge und Rücksprünge und
1.1.5 an ihrer Innenseite Rücksprünge (12) und Vorsprünge (13) aufweist, sowie mit
1.2 einem Verankerungselement (2), das
1.2.1 zum Einsetzen in die Dübelhülse (1) bestimmt ist, dadurch gekennzeichnet, daß
1.2.2 das Verankerungselement (2) in der Dübelhülse (1) durch die ausgehärtete Masse verankert wird, wobei die Vorsprünge (10) an der Außenseite der Dübelhülse (1) die Rücksprünge (12) an der Innenseite der Dübelhülse (1) bilden und umgekehrt.

2. Dübel nach Anspruch 1, bei dem der Innendurchmesser der Dübelhülse (1) an den Stellen der inneren Vorsprünge (13) größer ist als der Außendurchmesser des Verankerungselements (2).

3. Dübel nach einem der vorhergehenden Ansprüche, bei dem die Vorsprünge (10, 13) und die Rücksprünge (11, 12) sich über einen ganzen Umfang erstrecken.

4. Dübel nach einem der vorhergehenden Ansprüche, bei dem die Dübelhülse (1) die Form von flachen zylindrischen Abschnitten (5, 6) abwechselnd größeren und kleineren Durchmessers aufweist.

5. Dübel nach einem der vorhergehenden Ansprüche, bei dem die Dübelhülse (1) im Bereich ihres äußeren Endes (3) eine Zentriereinrichtung für das Verankerungselement (2) aufweist.

6. Dübel nach Anspruch 5, bei dem die Zentriereinrichtung von einem nach innen gerichteten Flansch (15) mit einer dem Außendurchmesser des Verankerungselements (2) entsprechenden Öffnung gebildet wird.

7. Dübel nach Anspruch 6, bei dem der Durchmesser der Öffnung (16) des Flanschs (15) kleiner ist als der minimale Innendurchmesser der Dübelhülse (1).

8. Dübel nach Anspruch 6 oder 7, bei dem der nach innen gerichtete Flansch (15) die Fortsetzung eines nach außen gerichteten Flanschs (14) der Dübelhülse (1) ist.

9. Dübel nach einem der vorhergehenden Ansprüche, bei dem das innere Ende (4) der Dübelhülse (1) einen geschlossenen Boden (8) bildet bzw. aufweist.

10. Dübel nach einem der vorhergehenden Ansprüche, bei dem die Dübelhülse (1) an ihrem inneren Ende (4) trichterartig endet.

11. Dübel nach einem der vorhergehenden Ansprüche, bei dem sich der Durchmesser der Dübelhülse (1) im Bereich ihres inneren Endes (4) stufenartig verringert.

12. Dübel nach einem der vorhergehenden Ansprüche, bei dem die Dübelhülse (1) zweiteilig längs einer Längsmittelebene geteilt hergestellt wird, wobei gegebenenfalls beide Teile der Dübelhülse (1) durch ein Filmscharnier miteinander verbunden sind.

## Claims

1. Dowel having
1.1 a screen-type dowel sleeve (1), which
1.1.1 is intended to receive a hardening material,
1.1.2 is anchored in a dowel hole by the hardened material, and
1.1.3 comprises a plastics material and
1.1.4 on its outside (10) has projections and recesses and
1.1.5 on its inside has recesses (12) and projections (13), as well as having
1.2 an anchoring element (2), which
1.2.1 is intended for insertion in the dowel sleeve (1), characterized in that
1.2.2 the anchoring element (2) is anchored in the dowel sleeve (1) by the hardened material, the projections (10) on the outside of the dowel sleeve (1) forming the recesses (12) on the inside of the dowel sleeve (1) and vice versa.

2. Dowel according to claim 1, in which the internal diameter of the dowel sleeve (1) at the locations of the inner projections (13) is larger than the external diameter of the anchoring element (2).

3. Dowel according to one of the preceding claims, wherein the projections (10, 13) and recesses (11, 12) extend over the entire circumference.

4. Dowel according to one of the preceding claims, wherein the dowel sleeve (1) is in the form of flat, cylindrical portions (5, 6) with an alternating larger and smaller diameter.

5. Dowel according to one of the preceding claims, wherein, in the vicinity of its outer end (3), the dowel sleeve (1) has a centring device for the anchoring element (2).

6. Dowel according to claim 5, wherein the centring device is formed by an inwardly directed flange (15) having an opening corresponding to the external diameter of the anchoring element (2).

7. Dowel according to claim 6, wherein the diameter of the opening (16) of the flange (15) is smaller than the minimum internal diameter of the dowel sleeve (1).

8. Dowel according to claim 6 or 7, wherein the inwardly directed flange (15) is the extension of an outwardly directed flange (14) of the dowel sleeve (1).

9. Dowel according to one of the preceding claims, wherein the inner end (4) of the dowel sleeve (1) forms or has a closed base (8).

10. Dowel according to one of the preceding claims, wherein the inner end (4) of the dowel sleeve (1) terminates in funnel-like manner.

11. Dowel according to one of the preceding claims, wherein the diameter of the dowel sleeve (1) decreases in step-like manner in the vicinity of its inner end.

12. Dowel according to one of the preceding claims, wherein the dowel sleeve (1) is made in two parts split along a median longitudinal plane and optionally the two parts of the dowel sleeve (1) are interconnected by a film hinge.

## Revendications

1. Cheville comprenant
1.1 une enveloppe de cheville (1) en forme de crible qui
1.1.1 sert à la réception d'une pâte durcissante,
1.1.2 qui est ancré dans un trou de cheville par la pâte durcie et
1.1.3 qui se compose de matière plastique et qui présente
1.1.4 sur sa face externe des saillies (10) et des saillies antagonistes (11) et
1.1.5 sur sa face interne des saillies (12) et des saillies antagonistes (13), ainsi que comprenant
1.2 un élément d'ancrage (2) qui
1.2.1 est destiné à être inséré dans l'enveloppe de cheville (1), caractérisée en ce que
1.2.2 l'élément d'ancrage (2) est ancré dans l'enveloppe de cheville (1) par la pâte durcie, les saillies (10) formant sur la face externe de l'enveloppe de cheville (1) les saillies antagonistes (12) sur la face interne de l'enveloppe de cheville (1) et inversement.

2. Cheville selon la revendication 1, où le diamètre interne de l'enveloppe de cheville (1) aux endroits des saillies internes (13) est plus grand que le diamètre externe de l'élément d'ancrage (2).

3. Cheville selon l'une des revendications précédentes où les saillies (10, 13) et les saillies antagonistes (11, 12) s'étendent sur toute une périphérie.

4. Cheville selon l'une des revendications précédentes où l'enveloppe de cheville (1) présente la forme de sections cylindriques plates (5, 6) de diamètre plus petit et plus grand en alternance.

5. Cheville selon l'une des revendications précédentes où l'enveloppe de cheville (1) présente, dans la zone de son extrémité externe (3), un dispositif de centrage pour l'élément d'ancrage (2).

6. Cheville selon la revendication 5, où le dispositif de centrage est formé par une bride (15) dirigée vers l'intérieur et présentant une ouverture correspondant au diamètre externe de l'élément d'ancrage (2).

7. Cheville selon la revendication 6, où le diamètre de l'ouverture (16) de la bride (15) est inférieur au diamètre minimal interne de l'enveloppe de douille (1).

8. Cheville selon la revendication 6 ou 7, où la bride (15) dirigée vers l'intérieur est le prolongement d'une bride (14) de l'enveloppe de cheville (1), cette bride étant dirigée vers l'extérieur.

9. Cheville selon l'une des revendications précédentes où l'extrémité interne (4) de l'enveloppe de cheville (1) forme respectivement présente un fond fermé (8).

10. Cheville selon l'une des revendications précédentes où l'enveloppe de cheville (1) se termine à son extrémité interne (4) en forme d'entonnoir.

11. Cheville selon l'une des revendications précédentes où le diamètre de l'enveloppe de cheville (1) se rétrécit par palier dans la zone de son extrémité interne (4).

12. Cheville selon l'une des revendications précédentes où l'enveloppe de cheville (1) est fabriquée en deux parties séparées le long d'un plan médian longitudinal, le cas échéant, les deux parties de l'enveloppe de cheville (1) étant reliées entre elles par une charnière en feuille.
